# EUROPEAN PATENT SPECIFICATION

(11) **EP 1 981 238 B1**
(45) Date of publication and mention of the grant of the patent: **21.09.2011**
(21) Application number: 07013072.9
(22) Date of filing: 04.07.2007
(51) Int. Cl.: H04L 29/06

(54) **Prefix matching algorithem**
Algorithmen zum Auffinden des passenden Präfixes
Algorithme de correspondance de préfixes

(30) Priority: 23.03.2007 US 728118
(43) Date of publication of application: 15.10.2008
(73) Proprietor: O2Micro, Inc., Santa Clara, CA 95054 (US)
(72) Inventor: Xing, Xianwu, Singapore 641669 (SG); Foo, Jongkwee, Singapore 680759 (SG)
(74) Representative: Jungen, Rolf

(56) References cited:
- WO-A-2005/017708
- CN-A- 1 783 838
- FANG YU ET AL: "Gigabit rate packet pattern-matching using TCAM" NETWORK PROTOCOLS, 2004. ICNP 2004. PROCEEDINGS OF THE 12TH IEEE INTER NATIONAL CONFERENCE ON BERLIN, GERMANY 5-8 OCT. 2004, PISCATAWAY, NJ, USA,IEEE, 5 October 2004 (2004-10-05), pages 174-183, XP010734820 ISBN: 978-0-7695-2161-9
- IL-SEOP SONG ET AL: "A Multi-gigabit Virus Detection Algorithm Using Ternary CAM" COMPUTATIONAL INTELLIGENCE AND SECURITY LECTURE NOTES IN COMPUTER SCIENCE;LECTURE NOTES IN ARTIFICIAL INTELLIG ENCE;LNCS, SPRINGER, BERLIN, DE, vol. 3802, 1 January 2006 (2006-01-01), pages 220-227, XP019031281 ISBN: 978-3-540-30819-5

## Description

### FIELD OF THE INVENTION

The present invention relates to computer networking structures and systems, and particularly to pattern matching operations using a prefix matching algorithm implemented in network processing applications that need content matching or content filtering.

### BACKGROUND OF THE INVENTION

Computer systems now operate in an environment of near ubiquitous connectivity, whether tethered to the internet and networks or connected via wireless technology. While the availability of always on communication has created countless new opportunities for web based businesses and information sharing, there has also been an increase in the frequency of attempted breaches of network security, or hacker attacks, intended to access confidential information or to otherwise interfere with network communications.

Given the importance of protecting information and services, there is a great deal of work from the security community. Recently, a number of applications aimed at detecting and thwarting attacks in the network have emerged, including anti-virus content filtering, firewalling, intrusion detection/prevention and network protection. At the heart of almost every modern network security system is a pattern matching algorithm, where a pattern includes a signature string of content to match. In the pattern matching operation, the passing packet traffic is compared against a library containing stored patterns of known suspicious, threatening or dangerous packet traffic. In the event a match is found between a screened packet traffic and a pattern entry in the library, an alert or alarm may be issued, and furthermore the matching packet traffic may be captured before any damage is done. Besides implementation in network security applications, pattern matching is also used in internet protocol (IP) routing where each packet traversing the router is retrieved to find the IP destination.

Unfortunately, checking every byte of every packet traffic to see if it matches one of a set of ten thousand patterns requires significant processing resources, both in terms of the amount of time to process a packet, and the amount of memory needed. Additionally, as the rate of packet flow has increased over time, pattern matching must operate at a gigabit per second (Gbps) speed in order not to restrict packet throughput. To address these concerns, the signature string matching engine is designed to include a prefix matching engine and an exact matching engine. The prefix matching engine examines the prefix of the traffic packet against a pre-compiled prefix look-up table and acts as a pre-processor to filter out most of packet traffics. Only those packet traffics whose prefix is found to match a predefined prefix in the prefix look-up table are further inspected in the exact matching engine. Since the exact matching engine is launched rarely, the overall packet throughput is enhanced greatly.

Though prefix matching algorithm provides a solution to enhancing throughput, current prefix matching technology still can't offer satisfactory performance, throughput, scalability and flexibility. For example, simple prefix matching checks the prefix of a traffic packet against all the prefixes stored in the prefix look-up table. When the number of signature strings reaches several thousands, performance of the simple prefix matching will degrade significantly due to the huge amount of processing time and adversely affected throughput. Also, when the length of the shortest signature is relatively small, simple prefix matching will demonstrate increased false positive and consequently the exact matching engine is launched frequently. As a result, prefix matching engine fails to make contribution to throughput enhancement.

International application WO 2005/017708 A2 relates to a method and apparatus based on the Bloom filters for detecting predefined signatures in a network packet payload. The apparatus comprises a prefix matching engine for storing prefix information of the predefined signatures in a plurality of table entries of a look-up table, checking a predetermined number of table entries to find a possible match of the input stream against the predefined signatures and an exact matching engine coupled to the prefix matching engine for colleding the prefix information associated with the possible match and making an exact match determination based on the collected prefix information. The article "Gigabit Rate Packet Pattern-Matching Using TCAM", Fang Yu et al, Proceedings of the 12th IEEE International Conference on Network Protocols (ICNP04), October 5, 2004, refers to a method for matching an input stream against predefined signatures comprising storing prefix information of the predefined signatures in a plurality of table entries of a lookup table, accessing a predetermined number of table entries according to a portion of the input stream and making a possible match determination based on the table entry values stored in a Ternary Content Addressable Memories (TCAM). The method disclosed is based on capability of TCAM to store one of three states.

### SUMMARY OF THE INVENTION

Accordingly, the present invention provides a prefix matching algorithm that makes the prefix matching determination more effectively and efficiently. One exemplary prefix matching engine comprises a look-up table, a logic circuit and a table entry buffer. The look-up table stores prefix information of predefined signatures. The logic circuit is coupled to the look-up table for accessing a predetermined number of table entries in the look-up table according to a portion of an input stream. The table entry buffer is coupled to the logic circuit for storing temporary table entry values of the predetermined number of table entries. Each temporary table entry contains position bits and length bits, the length bits being capable of determining the table entry values associated with the possible match determination and a predetermined position bit of each associated temporary table entry value being checked to make a possible match determination.

### BRIEF DESCRIPTION OF THE DRAWINGS

Advantages of the present invention will be apparent from the following detailed description of exemplary embodiments thereof, which description should be considered in conjunction with the accompanying drawings, in which:

FIG. 1 is a block diagram of a prefix matching engine according to one embodiment of the present invention.

FIG. 2 is a structure of the prefix look-up table in FIG. 1 according to one embodiment of the present invention.

FIG. 3 is a data structure of a table entry in the prefix look-up table according to one embodiment of the present invention.

FIG. 4 is a timing diagram of the prefix matching engine in FIG. 1 according to one embodiment of the present invention.

FIG. 5 is a table illustrating prefix matching condition.

### DETAILED DESCRIPTION OF THE INVENTION

Reference will now be made in detail to embodiments of the present invention. While the invention will be described in conjunction with the embodiments, it will be understood that they are not intended to limit the invention to these embodiments. On the contrary, the invention is intended to cover alternatives, modifications and equivalents, which may be included within the spirit and scope of the invention as defined by the appended claims.

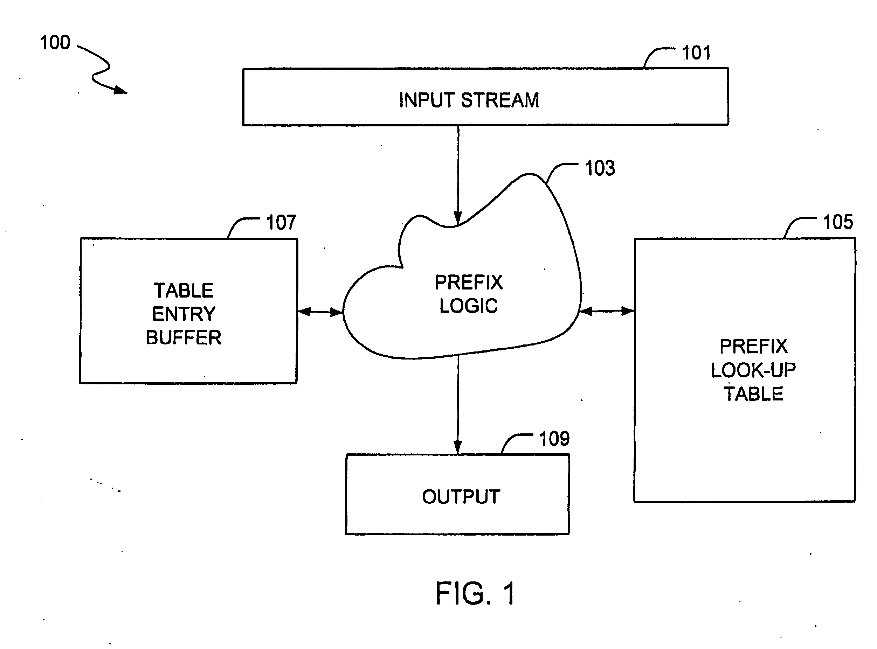

FIG.1 illustrates a block diagram of an exemplary prefix matching engine 100. The prefix matching engine 100 includes a prefix logic 103, a prefix look-up table 105 and a table entry buffer 107. Payload packets flow from an input stream block 101. The prefix matching engine 100 is coupled to the input stream block 101 and aims to check the presence of predefined signature strings deemed harmful to the network such as an internet worm or a computer virus in the payload packets. To the end, prefix string, a leftmost portion of every traffic packet, is inspected by the prefix matching engine 100. If a negative result is obtained after the prefix string inspection, it indicates that the inspected packet matches none of the predefined signature strings, and therefore the inspected packet can be filtered out. If a positive result is obtained after the prefix string inspection, it indicates that the inspected packet is a possible match of one of the predefined signature strings. When a possible match is found, information pertaining to the inspected packet is directed from the prefix matching engine 100 to an output block 109, from which the information is further sent to an exact matching engine (not shown) for assisting the exact packet inspection against the predefined signature strings.

To perform the prefix string inspection, the prefix logic 103 is coupled to the input stream block 101 and thus receives a portion of the input stream, which may have a line rate up to, or in excess of, 1 Gbits per second. According to this portion of the input stream, the prefix logic 103 accesses a predetermined number of table entries of the prefix look-up table 105 in consecutive clock cycles and stores the received table entry values in the table entry buffer 107. The prefix look-up table 105 is herein a pre-compiled fast memory such as static random-access memory (SRAM) or reduced latency dynamic random-access memory (RLDRAM), for storing prefix information of the predefined signature strings. Each table entry in the prefix look-up table includes a position segment, a length segment and an address segment, which will be discussed in more details further below. By examining the position segment of the temporary table entry values stored in the table entry buffer 107, the prefix logic 103 can determine whether the possible match of one of the predefined signature strings is found.

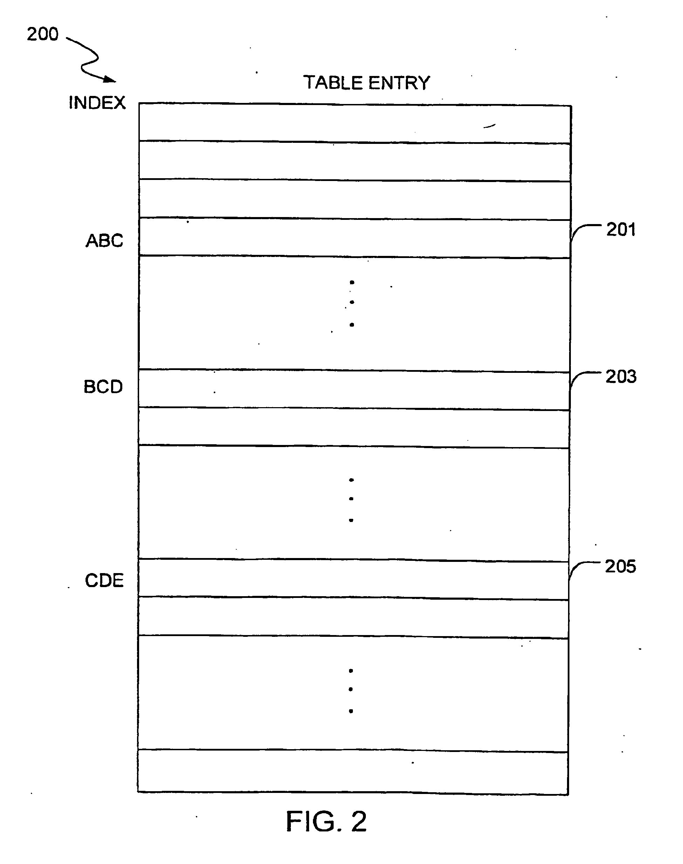

FIG. 2 illustrates an exemplary structure 200 of the prefix look-up table 105. The prefix look-up table 105 is preferably organized in a manner where prefixes of the predefined signatures are viewed as addresses which are applied to the prefix look-up table 105 implemented as an addressable memory. For example, the prefix "ABC" is viewed as the address of the table entry 201 and the table entry 201 may be accessed when the valid address "ABC" is provided. Similarly, the prefix "BCD" is viewed as the address of the table entry 203 and the prefix "CDE" is viewed as the address of the table entry 205.

Those skilled in the art will readily recognize when the memory space is limited, the prefix look-up table 105 may not accommodate the large number of table entries addressed as the prefixes of the predefined signatures. Therefore, hashing may be implemented on the prefix look-up table 105. Hashing may reduce the required large, unmanageable table to a small manageable index. In the process, there is a chance that two or more table entries may generate the same hash index and these table entries are stored in the same location in the hash table. Fox example, the prefix look-up table 105 may be cycle redundancy check (CRC) hashed. After CRC hashing, the prefix "ABC" corresponds to the index of table entry 201 and also the table entry 201 may be accessed when the address "ABC" is provided. Similarly, the prefix "BCD" corresponds to the index of the table entry 203 and the prefix "CED" corresponds to the index of the table entry 205.

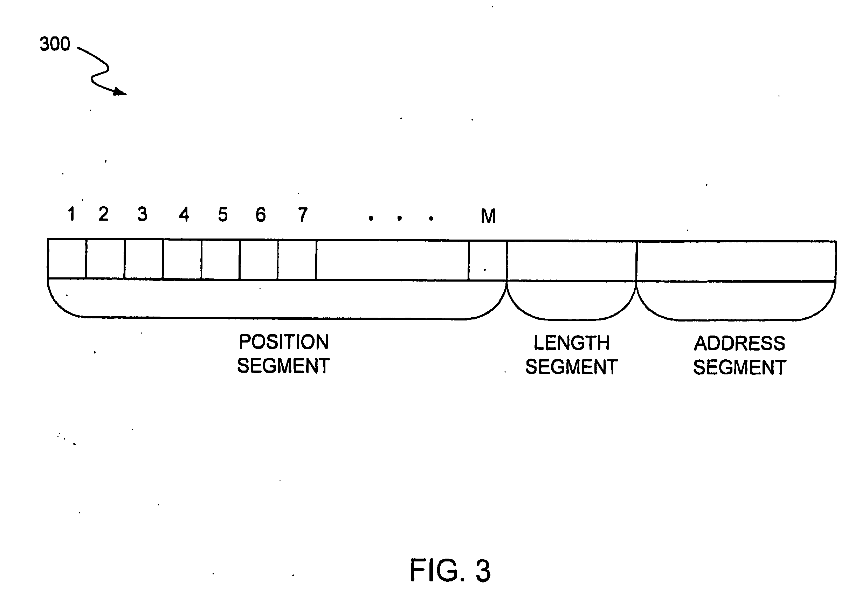

FIG. 3 illustrates an exemplary data structure 300 of the table entry in the prefix look-up table 105. As previously stated, each table entry includes the position segment, the length segment and the address segment. Accordingly, the data structure of the table entry comprises position bits, length bits and the address bits. The position bits, for example bit 0 to bit m, store position information pertaining to a prefix. For example, bit N of the position bits of the table entry 201, which is indexed as "ABC", indicates whether the prefix "ABC" appears at position; N of a predefined signature. The length bits store the length information pertaining to a prefix. For example, the length bits of the table entry 201, which is indexed as "ABC", indicate the length of the predefined signature that is the shortest among those starting with the prefix "ABC". The address bits store the address information pertaining to a prefix. For example, the address bits of the table entry 201, which is indexed as "ABC", indicate the address of a list of predefined signatures starting with the prefix "ABC".

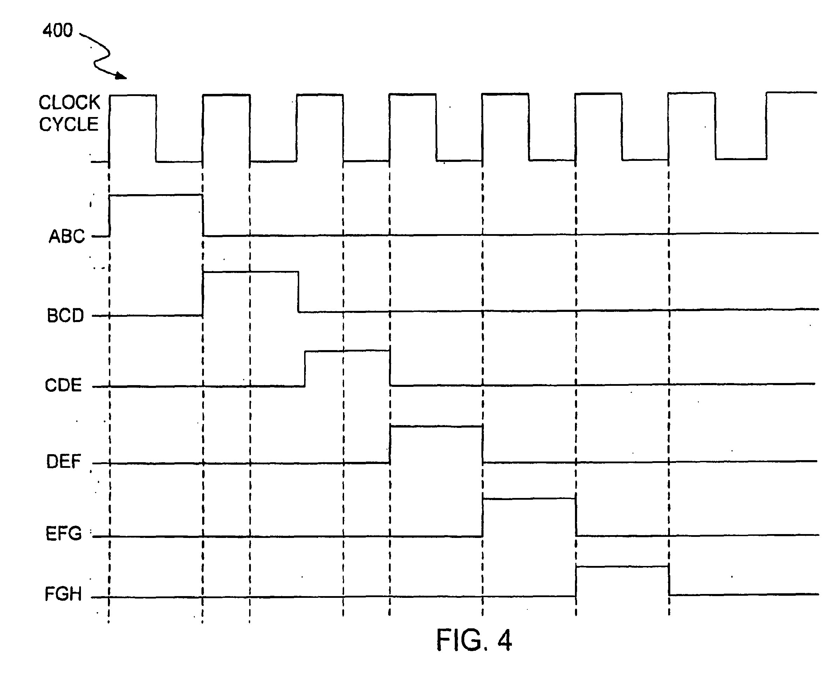

FIG. 4 illustrates an exemplary timing diagram 400 of the prefix matching engine 100. Supposing a portion of the input stream is "ABCDEFGH", the prefix logic 103 will access the prefix look-up table 105 in consecutive clock cycles by using the address "ABC", "BCD", "CDE", "DEF", "EFG" and "FGH", respectively. That is, the portion "ABCDEFGH" is partitioned into six overlapping adjacent strings and each overlapping adjacent string corresponds to one of the indexes of the prefix look-up table 105. Those skilled in the art will readily recognize that the portion length of the input stream used for prefix matching depends on design parameters, such as the line rate of the input stream, the desired throughput, etc. In addition, the byte length of each overlapping adjacent string depends on the byte length of the indexes of the prefix look-up table 105.

When each table entry, respectively indexed as "ABC", "BCD", "CDE", "DEF", "EFG" and "FGH", is accessed, the table entry value received by the prefix logic 103 is further temporarily stored in the table entry buffer 107. The prefix logic 103 may look into the position bits of associated temporary entry values to determine whether the possible match of one of the predefined signature strings is found.

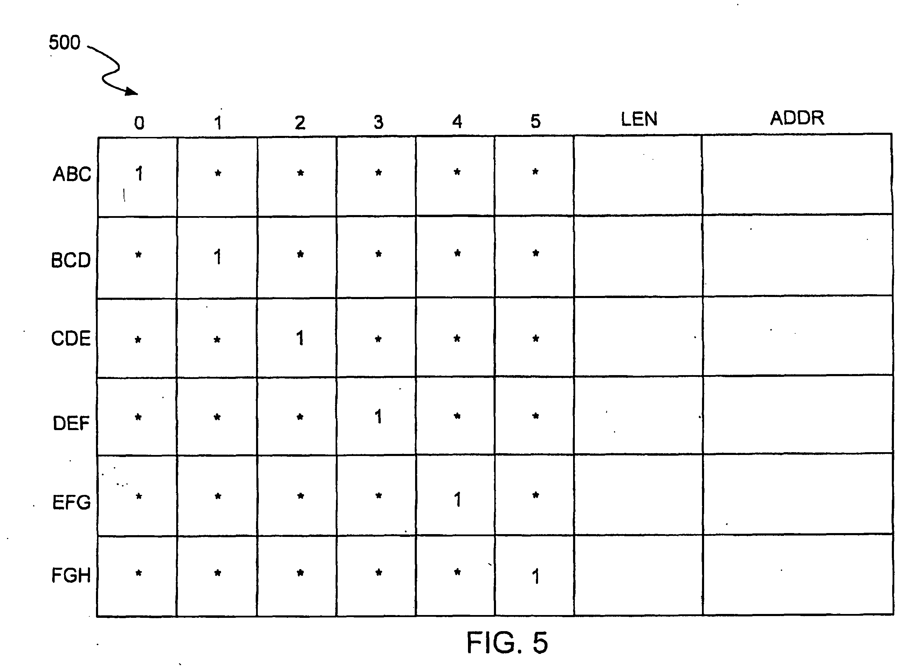

FIG. 5 illustrates an exemplary table 500 indicating prefix matching condition. Again, supposing a portion of the input stream is "ABCDEFGH", the table entry buffer 107 stores temporary table entry values whose indexes are respectively "ABC", "BCD", "CDE", "DEF", "EFG" and "FGH". To determine whether the string "ABC" is a prefix of the predefined signature strings, the prefix logic 103 will identify associated table entry values to be examined, depending on the length bits of the temporary table entry value indexed as "ABC". For example, if the length bits indicate the shortest signature of which "ABC" is a prefix has 3 bytes, the prefix logic 103 will examine the position bit 0 of the temporary table entry value indexed as "ABC" to make the prefix "ABC" matching determination. If the length bits indicate the shortest signature of which "ABC" is a prefix has 4 bytes, the prefix logic 103 will examine not only the position bit 0 of the temporary table entry value indexed as "ABC" but also the position bit 1 of the temporary table entry value indexed as "BCD" to make the prefix "ABC" matching determination.

Similarly, if the length bits indicate the shortest signature of which "ABC" is a prefix has 8 bytes, the prefix logic 103 will not only examine the position bit 0 of the temporary table entry value indexed as "ABC", but also the position bit 1 of the temporary table entry value indexed as "BCD", the position bit 2 of the temporary table entry value indexed as "CDE", the position bit 3 of the temporary table entry value indexed as "CDF", the position bit 4 of the temporary table entry value indexed as "DFG", and the position bit 5 of the temporary table entry value indexed as "FGH". In this condition, the prefix logic 103 can determine that the input stream that starts with "ABC" matches the prefix "ABC" of the predefined signature strings only when all the examined bits are logic 1 as shown in FIG. 5. Consequently, a possible match of one of the predefined signature strings is found, and the position and address information contained in these temporary table entry values can be directed to the output block 109 and then to the exact matching engine (not shown) for assisting the exact matching inspection. Furthermore, the bits filled with asterisk (*) are Not Care (NC) bits for prefix matching inspection. However, if the prefix matching condition as illustrated in FIG. 5 is not met, the prefix logic 103 can determine that the input stream that starts with "ABC" does not match the prefix "ABC" of the predefined signature strings and the input stream that starts with "ABC" will be filtered out and discarded. Consequently, the exact matching engine (not shown) will not be launched. Additionally, though the valid logic of the position bits is set to be logic 1 as indicated in FIG. 5, those skilled in the art will readily recognize the valid logic is programmable and thus it may also be programmed to be logic 0.

In the similar way, to determine whether the string "BCD" is a prefix of the predefined signature strings, the prefix logic 103 will identify associated table entry values to be examined, depending on the length bits of the temporary table entry value indexed as "BCD". For example, if the length bits indicate the shortest signature of which "BCD" is a prefix has 3 bytes, the prefix logic 103 will examine the position bit 0 of the temporary table entry value indexed as "BCD" to make the prefix "BCD" matching determination. If the length bits indicate the shortest signature of which "BCD" is a prefix has 4 bytes, the prefix logic 103 will examine not only the position bit 0 of the temporary table entry value indexed as "BCD" but also the position bit 1 of the temporary table entry value indexed as "CDE" to make the prefix "BCD" matching determination.

From the description above, it can be understood that when determining whether the input stream starting with "ABC" is a possible match, the prefix matching engine 100 examines many more bytes (e.g., "ABCDEFGH") than the conventional prefix matching algorithm, which only checks "ABC" itself. As the actual inspected length of the input stream is increased, the false positives with the short prefix matching are significantly reduced and thus the prefix matching engine 100 is no longer sensitive to the shortest signatures. Experimental results show that with the proposed prefix matching algorithm more than 99% of the input stream can be filtered out under critical conditions. In addition, owing to the relived false positives, performance of the prefix matching engine 100 may still be maintained under an extremely large set of predefined signature strings. Moreover, the prefix matching engine 100 supports any type of exact matching algorithms in later stage. Furthermore, the prefix matching engine 100 is specifically for field programmable gate array (FPGA) or application specific integrated circuit (ASIC) implementation and allows low FPGA/ASIC resources.

Those skilled in the art will readily recognize that the foregoing scenario with a three-byte index, a two-byte overlap and an eight-byte portion of the input stream is exemplary in nature. The user can choose any suitable combination of index size, byte overlap, and byte portion of the input stream, as is desired and fits within the processing requirements for the input stream being reviewed and hardware resources.

The terms and expressions which have been employed herein are used as terms of description and not of limitation, and there is no intention, in the use of such terms and expressions, of excluding any equivalents of the features shown and described (or portions thereof), and it is recognized that various modifications are possible within the scope of the claims. Other modifications, variations, and alternatives are also possible. Accordingly, the claims are intended to cover all such equivalents.

## Claims

1. A device (100) for matching an input stream (101) against predefined signatures, comprising:
a look-up table (105) for storing prefix information of the predefined signatures in a plurality of table entries;
a logic circuit (103) coupled to the look-up table (105) for accessing a predetermined number of table entries in the look-up table according to a portion of the input stream; **characterized by**
a table entry buffer (107) coupled to the logic circuit (103) for storing temporary table entry values of the predetermined number of table entries,
wherein each temporary table entry value contains position bits and length bits, the length bits being capable of determining the table entry values associated with the possible match determination and a predetermined position bit of each associated temporary table entry value being checked to make a possible match determination.

2. The device of claim 1, further comprising, an output block (109) coupled to the logic circuit (103) for collecting the prefix information indicated by the temporary table entry values when the possible match is found, wherein the device being adapted to further direct the prefix information indicated by the temporary table entry values to an exact matching engine for exact signature matching.

3. The device of claim 1, wherein the plurality of table entries in the look-up table (105) are index organized and indexes (ABC, BCD, CDE, DEF, EFG, FGH) of the plurality of table entries correspond to prefixes of the predefined signatures.

4. The device of cairn 1, wherein the look-up table (105) corresponds to a pre-compiled fast memory.

5. The device of claim 1, wherein the look-up table is hashed.

6. The device of claim 1, wherein the device (100) being adapted to partition the portion of the input stream (101) into a predetermined number of overlapping adjacent strings wherein the predetermined number of overlapping adjacent strings correspond to indexes (ABC, BCD, CDE, DEF, EFG, FGH) of the predetermined number of table entries.

7. The device of claim 1, wherein the device (100) being adapted such that the predetermined number of table entries are accessed in consecutive clock cycles.

8. The device of claim 1, wherein each table entry in the look-up table comprises a position segment, a length segment and an address segment, wherein bit N of the position segment indicates whether index of the table entry corresponds to position N of one of the predefined signatures, the length segment stores the length of the shortest predefined signature whose prefix corresponds to index of the table entry, and the address segment stores the address of a list of predefined signatures whose prefix corresponds to index of the table entry.

9. The device of claim 1, wherein the logic circuit (103) being adapted to find the possible match when the temporary table entry values meet a predetermined condition.

10. The device of claim 1, wherein the matching device (100) is implemented in a field programmable gate array (FPGA) or an application specific integrated circuit (ASIC).

11. A method for matching an input stream (101) against predefined signatures, comprising: storing prefix information of the predefined signatures in a plurality of table entries; accessing a predetermined number of table entries according to a portion of the input stream;
**characterized in** storing temporary table entry values of the predetermined number of table entries, wherein each temporary table entry value contains position bits and length bits;
checking the length bits to determine the temporary table entry values associated with a possible match determination; and
checking a predetermined position bit of each associated temporary table entry to make a possible match determination.

12. the method of claim 11, further comprising, performing a hash on the prefix information of the predetermined signatures.

13. The method of claim 11, wherein the predetermined number of table entries are accessed in consecutive clock cycles.

14. The method of claim 11, further comprising, directing the prefix information indicated by the temporary table entry values to an exact matching engine; and making an exact match determination based on the received prefix information in the exact matching engine.

15. The method of claim 11, further comprising, indexing the plurality of table entries by prefixes of the predefined signatures.

16. The method of claim 11, further comprising, partitioning the portion of the input stream into a predetermined number of overlapping adjacent strings, wherein the predetermined number of overlapping adjacent strings corresponds to Indexes of the predetermined number of table entries.

17. The method of claim 11, wherein the possible match is found when the temporary table entry values meet a predetermined condition.

18. The method of claim 11, wherein each temporary table entry value contains position bits, length bits and address bits.

19. The method of claim 11, wherein the step of making a possible match determination further comprising: determining temporary table entry values associated with the possible match determination; and checking a predetermined position bit of each associated temporary table entry value to make a possible match determination.

20. A system for matching an input stream (101) against predefined signatures, comprising:
a prefix matching engine (100) including
a look-up table (105) for storing prefix information of the predefined signatures in a plurality of table entries;
a logic circuit (103) coupled to the look-up table for accessing a predetermined number of table entries in the look-up table according to a portion of the input stream; **characterized by**
a table entry buffer (107) coupled to the logic circuit for storing temporary table entry values of the predetermined number of table entries, wherein
each temporary table entry value contains position bits and length bits, the length bits being capable of determining the table entry values associated with the possible match determination and a predetermined position bit of each associated temporary table entry value being checked to make a possible match determination; and
an exact matching engine coupled to the prefix matching engine for collecting the prefix information associated with the possible match and
making an exact match determination based on the collected prefix information.

21. The system of claim 20, wherein said prefix matching engine (100) being adapted to index organize the plurality of table entries, said prefix matching engine further being adapted to partition a portion of the input stream into a predetermined number of overlapping adjacent strings, wherein indexes of the predetermined number of tables entries corresponds to the predetermined number of overlapping adjacent strings.

22. The system of claim 20, wherein the system is adapted to launch the exact matching engine only if the possible match is found in the prefix matching engine.

23. The system of claim 20, wherein the prefix matching engine (100) is implemented in field programmable gate array or application specific integrated circuit.

24. The system of claim 20, wherein the exact matching engine is operable with an arbitrary exact matching algorithm.

## Patentansprüche

1. Vorrichtung (100) zum Prüfen der Übereinstimmung eines Eingabestroms (101) mit vordefinierten Signaturen, umfassend:
eine Lookup-Tabelle (105) zur Speicherung von Präfixinformationen der vordefinierten Signaturen in einer Vielzahl von Tabelleneinträgen;
eine mit der Lookup-Tabelle (105) gekoppelte logische Schaltung (103) für den Zugriff auf eine vorgegebene Anzahl von Tabelleneinträgen in der Lookup-Tabelle gemäß einem Abschnitt des Eingabestroms;
**gekennzeichnet durch**
einen mit der logischen Schaltung (103) gekoppelten Tabelleneintragsspeicher (107) zur Speicherung von temporären
Tabelleneintragswerten der vorgegebenen Anzahl von
Tabelleneinträgen, wobei jeder temporäre Tabelleneintragswert Positionsbits und Längenbits enthält, wobei die Längenbits geeignet sind für die Bestimmung der Tabelleneintragswerte im Zusammenhang mit der Bestimmung der möglichen Übereinstimmung und wobei ein vorgegebenes Positionsbit jedes assoziierten temporären
Tabelleneintragswerts geprüft wird, um eine Bestimmung einer möglichen Übereinstimmung vorzunehmen.

2. Vorrichtung nach Anspruch 1, ferner umfassend einen mit der logischen Schaltung (103) gekoppelten Ausgabeblock (109) zum Sammeln der durch die temporären Tabelleneintragswerte angegebenen Präfixinformationen, wenn eine mögliche Übereinstimmung gefunden wird, wobei die Vorrichtung derart ausgebildet ist, dass sie ferner die durch die temporären Tabelleneintragswerte angegebenen Präfixinformationen für exakte Signaturübereinstimmung zu einer Maschine für exakte Übereinstimmung leitet.

3. Vorrichtung nach Anspruch 1, wobei die Vielzahl der Tabelleneinträge in der Lookup-Tabelle (105) index-organisiert ist und die Indizes (ABC, BCD, CDE, DEF, EFG, FGH) der Vielzahl von Tabelleneinträgen den Präfixen der vordefinierten Signaturen entspricht.

4. Vorrichtung nach Anspruch 1, wobei die Lookup-Tabelle (105) einem vorkompilierten schnellen Speicher entspricht.

5. Vorrichtung nach Anspruch 1, wobei die Lookup-Tabelle eine Hash-Tabelle ist.

6. Vorrichtung nach Anspruch 1, wobei die Vorrichtung (100) ausgebildet ist für die Partitionierung des Abschnitts des Eingangsstroms (101) in eine vorgegebene Anzahl von überlappenden benachbarten Strings, wobei die vorgegebene Anzahl von überlappenden benachbarten Strings den Indizes (ABC, BCD, CDE, DEF, EFG, FGH) der vorgegebenen Anzahl von Tabelleneinträgen entspricht.

7. Vorrichtung nach Anspruch 1, wobei die Vorrichtung derart ausgebildet ist, dass auf die vorgegebene Anzahl von Tabelleneinträgen in konsekutiven Taktzyklen zugegriffen wird.

8. Vorrichtung nach Anspruch 1, wobei jeder Tabelleneintrag in der Lookup-Tabelle ein Positionssegment, ein Längensegment und ein Adressensegment umfasst, wobei das Bit N des Positionssegments angibt, ob der Index des Tabelleneintrags der Position N einer der vordefinierten Signaturen entspricht, wobei das Längensegment die Länge der kürzesten vordefinierten Signatur speichert, deren Präfix dem Index des Tabelleneintrags entspricht, und wobei das Adressensegment die Adresse einer Liste von vordefinierten Signaturen speichert, deren Präfix dem Index des Tabelleneintrags entspricht.

9. Vorrichtung nach Anspruch 1, wobei die logische Schaltung (103) ausgebildet ist für das Auffinden der möglichen Übereinstimmung, wenn die temporären Tabelleneintragswerte eine vorgegebene Bedingung erfüllen.

10. Vorrichtung nach Anspruch 1, wobei die Abgleichsvorrichtung (100) implementiert ist in einem feldprogrammierbaren Gate Array (FPGA) oder in einer anwendungsspezifischen integrierten Schaltung (ASIC).

11. Verfahren zum Prüfen der Übereinstimmung eines Eingangsstroms (101) mit vordefinierten Signaturen, umfassend: das Speichern von Präfixinformationen der vordefinierten Signaturen in einer Vielzahl von Tabelleneinträgen; Zugreifen auf eine vorgegebene Anzahl von Tabelleneinträgen gemäß einem Abschnitt des Eingangsstroms; **gekennzeichnet durch** das Speichern von temporären Tabelleneintragswerten der vorgegebenen Anzahl von Tabelleneinträgen, wobei jeder temporäre Tabelleneintragswert Positionsbits und Längenbits enthält;
Prüfen der Längenbits zur Bestimmung der temporären Tabelleneintragswerte im Zusammenhang mit der Bestimmung einer möglichen Übereinstimmung; und
Prüfen eines vorgegebenen Positionsbits jedes zugehörigen temporären Tabelleneintrags zur Durchführung der Bestimmung einer möglichen Übereinstimmung.

12. Verfahren nach Anspruch 11, ferner umfassend die Durchführung einer Hashfunktion an den Präfixinformationen der vorgegebenen Signaturen.

13. Verfahren nach Anspruch 11, wobei auf die vorgegebene Anzahl von Tabelleneinträgen in konsekutiven Taktzyklen zugegriffen wird.

14. Verfahren nach Anspruch 11, ferner umfassend das Leiten der durch die temporären Tabelleneintragswerte angegebenen Informationen zu einer Maschine für exakte Übereinstimmung und Durchführen der Bestimmung einer exakten Übereinstimmung basierend auf den empfangenen Präfixinformationen in der Maschine für den exakten Abgleich.

15. Verfahren nach Anspruch 11, ferner umfassend die Indizierung der Vielzahl von Tabelleneinträgen durch Präfixe der vordefinierten Signaturen.

16. Verfahren nach Anspruch 11, ferner umfassend die Partitionierung des Abschnitts des Eingangsstroms in eine vorgegebene Anzahl von überlappenden benachbarten Strings, wobei die vorgegebene Anzahl von überlappenden benachbarten Strings den Indizes der vorgegebenen Anzahl von Tabelleneinträgen entspricht.

17. Verfahren nach Anspruch 11, wobei die mögliche Übereinstimmung gefunden ist, wenn die temporären Tabelleneintragswerte eine vorgegebene Bedingung erfüllen.

18. Verfahren nach Anspruch 11, wobei jeder temporäre Tabelleneintragswert Positionsbits, Längenbits und Adressenbits enthält.

19. Verfahren nach Anspruch 11, wobei der Schritt der Durchführung der Bestimmung einer möglichen Übereinstimmung ferner umfasst: das Bestimmen von temporären Tabelleneintragswerten im Zusammenhang mit der Bestimmung einer möglichen Übereinstimmung und Prüfen eines vorgegebenen Positionsbits des zugehörigen temporären Tabelleneintragswerts zur Durchführung der Bestimmung einer möglichen Übereinstimmung.

20. System zum Prüfen der Übereinstimmung eines Eingangsstroms (101) mit vordefinierten Signaturen, umfassend:
eine Präfix-Übereinstimmungsmaschine (100), umfassend eine Lookup-Tabelle (105) für die Speicherung von Präfixinformationen der vordefinierten Signaturen in einer Vielzahl von Tabelleneinträgen;
eine mit der Lookup-Tabelle gekoppelte logische Schaltung (103) für den Zugriff auf eine vorgegebene Anzahl von Tabelleneinträgen in der Nachschlagetabelle gemäß einem Abschnitt des Eingabestroms;
**gekennzeichnet durch**
einen mit der logischen Schaltung gekoppelten Tabelleneintragsspeicher (107) zur Speicherung von temporären Tabelleneintragswerten der vorgegebenen Anzahl von Tabelleneinträgen, wobei jeder temporäre Tabelleneintragswert Positionsbits und Längenbits enthält, wobei die Längenbits geeignet sind für die Bestimmung der Tabelleneintragswerte im Zusammenhang mit der Bestimmung der möglichen Übereinstimmung und wobei ein vorgegebenes Positionsbit jedes assoziierten temporären Tabelleneintragswerts geprüft wird, um eine Bestimmung einer möglichen Übereinstimmung vorzunehmen; und
eine mit der Präfix-Übereinstimmungsmaschine gekoppelte Maschine für exakte Übereinstimmung zum Sammeln von Präfixinformationen im Zusammenhang mit der möglichen Übereinstimmung und zum Durchführen der Bestimmung einer exakten Übereinstimmung basierend auf den gesammelten Präfixinformationen.

21. System nach Anspruch 20, wobei die Präfix-Übereinstimmungsmaschine (100) ausgebildet ist für die Index-Organisation der Vielzahl von Tabelleneinträgen, wobei die Präfix-Übereinstimmungsmaschine ferner ausgebildet ist für die Partitionierung eines Abschnitts des Eingangsstroms in eine vorgegebene Anzahl von überlappenden benachbarten Strings, wobei Indizes der vorgegebenen Anzahl von Tabelleneinträgen der vorgegebenen Anzahl von überlappenden benachbarten Strings entsprechen.

22. System nach Anspruch 20, wobei das System derart ausgebildet ist, dass die Maschine für exakte Übereinstimmung nur gestartet wird, wenn die mögliche Übereinstimmung in der Präfix-Übereinstimmungsmaschine gefunden wurde.

23. System nach Anspruch 20, wobei die Präfix-Übereinstimmungsmaschine (100) in dem feld programmierten Gate Array oder in einer anwendungsspezifischen integrierten Schaltung implementiert ist.

24. System nach Anspruch 20, wobei die Maschine für exakte Übereinstimmung mit einem beliebigen Algorithmus für exakte Übereinstimmung betrieben werden kann.

## Revendications

1. Un dispositif (100) pour vérifier si un flux d'entrée (101) correspond à des signatures prédéfinies, comprenant:
un tableau de consultation (105) pour stocker de l'information de préfixe des signatures prédéfinies dans une pluralité d'entrées de tableau;
un circuit logique (103) relié au tableau de consultation (105) pour accéder à un nombre prédéterminé d'entrées de tableau dans le tableau de consultation selon une partie du flux d'entrée;
**caractérisé par**
un tampon d'entrées de tableau (107) relié au circuit logique (103) pour stocker des valeurs temporaires d'entrée de tableau du nombre prédéterminé d'entrées de tableau, chaque valeur temporaire d'entrée de tableau contentant des bits de position et des bits de longueur, les bits de longueur étant capables de déterminer les valeurs d'entrée de tableau associées à une détermination de correspondance possible et un bit de position prédéterminé de chaque valeur temporaire d'entrée de tableau associée étant vérifié afin de faire une détermination de correspondance possible.

2. Le dispositif selon la revendication 1, comprenant en outre un bloc de sortie (109) relié au circuit logique (103) pour la collecte de l'information de préfixe indiquée par les valeurs temporaires d'entrée de tableau lorsque la correspondance possible est trouvée, le dispositif étant en outre adapté à diriger l'information de préfixe indiquée par les valeurs temporaires d'entrée de tableau à un moteur de correspondance exacte pour vérifier la correspondance exacte de signature.

3. Le dispositif selon la revendication 1, dans lequel la pluralité d'entrées de tableau dans le tableau de consultation (105) sont organisées par index et des index (ABC, BCD, CDE, DEF, EFG, FGH) de la pluralité d'entrées de tableau correspondent aux préfixes des signatures prédéfinies.

4. Le dispositif selon la revendication 1, dans lequel le tableau de consultation (105) correspond à une mémoire rapide pré-compilée.

5. Le dispositif selon la revendication 1, dans lequel le tableau de consultation est un tableau de hachage.

6. Le dispositif selon la revendication 1, dans lequel le dispositif (100) est adapté partitionner la partie du flux d'entrée (101) en un nombre prédéterminé de chaînes adjacentes en chevauchement et dans lequel le nombre prédéterminé de chaînes adjacentes en chevauchement correspondent à des indexs (ABC, BCD, CDE , DEF, EFG, FGH) du nombre prédéterminé d'entrées de tableau.

7. Le dispositif selon la revendication 1, dans lequel le dispositif (100) est adapté de telle sorte que le nombre prédéterminé d'entrées de tableau sont accédées durant des cycles d'horloge consécutifs.

8. Le dispositif selon la revendication 1, dans lequel chaque entrée de tableau dans le tableau de consultation comprend un segment de position, un segment de longueur et un segment d'adresse, dans lequel un bit N du segment de position indique si l'index de l'entrée de tableau correspond à la position N de l'une des signatures prédéfinies, le segment de longueur stocke la longueur de la plus courte signature prédéfinie dont le préfixe correspond à l'index de l'entrée de tableau, et le segment d'adresse stocke l'adresse d'une liste de signatures prédéfinies dont le préfixe correspond à l'index de l'entrée de tableau.

9. Le dispositif selon la revendication 1, dans lequel le circuit logique (103) est adapté à trouver la correspondance possible lorsque les valeurs temporaires d'entrée de tableau répondent à une condition prédéterminée.

10. Le dispositif selon la revendication 1, dans lequel le dispositif de correspondance (100) est mis en oeuvre dans un réseau prédiffusé programmable par l'utilisateur (FPGA) ou un circuit intégré à application spécifique (ASIC).

11. Une méthode pour vérifier si un flux d'entrée (101) correspond à des signatures prédéfinies, comprenant:
stocker de l'information de préfixe des signatures prédéfinies dans une pluralité d'entrées de table;
accéder à un nombre prédéterminé d'entrées de tableau selon une partie du flux d'entrée;
**caractérisée par**
stocker des valeurs temporaires d'entrée de tableau du nombre prédéterminé d'entrées de tableau, chaque valeur temporaire d'entrée de tableau contenant des bits de position et des bits de longueur;
vérifier les bits de longueur afin de déterminer les valeurs temporaires d'entrée de tableau associées à une détermination de correspondance possible, et
vérifier un bit de position prédéterminé de chaque valeur temporaire d'entrée de tableau associée afin de faire une détermination de correspondance possible.

12. La méthode selon la revendication 11, comprenant en outre : effectuer un hachage sur l'information de préfixe des signatures prédéterminées.

13. La méthode selon la revendication 11, dans lequel le nombre prédéterminé d'entrées de tableau sont accédées durant des cycles d'horloge consécutifs.

14. La méthode selon la revendication 11, comprenant en outre : diriger l'information de préfixe indiquée par les valeurs temporaires d'entrée de tableau à un moteur de correspondance exacte; et faire une détermination de correspondance exacte sur la base de l'information de préfixe reçue dans le moteur de correspondance exacte.

15. La méthode selon la revendication 11, comprenant en outre : indexer la pluralité d'entrées de tableau par des préfixes des signature prédéfinies.

16. La méthode selon la revendication 11, comprenant en outre, partitionner la partie du flux d'entrée (101) en un nombre prédéterminé de chaînes adjacentes en chevauchement, dans laquelle le nombre prédéterminé de des chaînes adjacentes en chevauchement correspondent à des indexs du nombre prédéterminé d'entrées de tableau.

17. La méthode selon la revendication 11, dans laquelle une correspondance possible est trouvée lorsque les valeurs temporaires d'entrée de tableau répondent à une condition prédéterminée.

18. La méthode selon la revendication 11, dans laquelle chaque valeur du tableau temporaire d'entrée contient des bits de position, des bits de longueur et des bits d'adresse.

19. La méthode selon la revendication 11, dans lequel l'étape de faire une détermination de correspondance possible comprend en outre: déterminer des valeurs temporaires d'entrée de tableau associées à la détermination de correspondance possible, et vérifier un bit de position prédéterminé de chaque valeur temporaire d'entrée de tableau associée pour faire une détermination de correspondance possible.

20. Un système pour vérifier si un flux d'entrée (101) correspond à des signatures prédéfinies, comprenant:
un moteur de correspondance de préfixe (100), incluant un tableau de consultation (105) pour stocker de l'information de préfixe des signatures prédéfinies dans une pluralité d'entrées de tableau; un circuit logique (103) relié au tableau de consultation (105) pour accéder à un nombre prédéterminé d'entrées de tableau dans le tableau de consultation selon une partie du flux d'entrée;
**caractérisé par**
un tampon d'entrées de tableau (107) relié au circuit logique (103) pour stocker des valeurs temporaires d'entrée de tableau du nombre prédéterminé d'entrées de tableau, chaque valeur temporaire d'entrée de tableau contentant des bits de position et des bits de longueur, les bits de longueur étant capables de déterminer les valeurs d'entrée de tableau associées à une détermination de correspondance possible et un bit de position prédéterminé de chaque valeur temporaire d'entrée de tableau associée étant vérifié afin de faire une détermination de correspondance possible; et
un moteur de correspondance exacte relié au moteur de correspondance de préfixe pour recueillir l'information de préfixe associée avec la correspondance possible et faire une détermination de correspondance exacte sur base de l'information de préfixe recueillie.

21. Le système selon la revendication 20, dans lequel ledit moteur de correspondance de préfixe (100) est adapté à organiser par index la pluralité d'entrées de tableau, ledit moteur de correspondance de préfixe étant en outre adapté à partitionner une partie du flux d'entrée en un nombre prédéterminé de chaînes adjacentes en chevauchement, dans lequel des index du nombre prédéterminé d'entrées de tableau correspondent au nombre prédéterminé de chaînes adjacentes en chevauchement.

22. Le système selon la revendication 20, dans lequel le système est adapté pour lancer le moteur de correspondance exacte seulement si la correspondance possible est trouvée dans le moteur de correspondance de préfixe.

23. Le système selon la revendication 20, dans lequel le moteur de correspondance de préfixe (100) est mis en oeuvre dans un réseau prédiffusé programmable par l'utilisateur ou un circuit intégré à application spécifique.

24. Le système selon la revendication 20, dans lequel le moteur de correspondance exacte peut fonctionner avec un quelconque algorithme de correspondance exacte.
